**Europäisches Patentamt**

**European Patent Office**

**Office européen des brevets**

(19)

(11) Veröffentlichungsnummer: **0 201 095**
**B1**

(12) ## EUROPÄISCHE PATENTSCHRIFT

(45) Veröffentlichungstag der Patentschrift:
**18.01.89**

(51) Int. Cl.⁴: **G01G 23/04**, G01G 21/12

(21) Anmeldenummer: **86106234.7**

(22) Anmeldetag: **07.05.86**

(54) **Pendelbegrenzer für Behälter v. Wäge- u. Dosiereinrichtungen.**

(30) Priorität: **10.05.85 DE 3516943**

(43) Veröffentlichungstag der Anmeldung:
**17.12.86 Patentblatt 86/46**

(45) Bekanntmachung des Hinweises auf die Patenterteilung:
**18.01.89 Patentblatt 89/3**

(84) Benannte Vertragsstaaten:
**AT BE CH FR GB LI**

(56) Entgegenhaltungen:
**DE-A- 2 531 746**
**DE-A- 3 015 963**
**US-A- 3 063 576**

(73) Patentinhaber: **Pfister GmbH, Stätzlinger Strasse 70, D-8900 Augsburg(DE)**

(72) Erfinder: **Wölfel, Siegfried, Reisingerstrasse 9, D-8900 Augsburg(DE)**

(74) Vertreter: **Kahler, Kurt, Dipl.-Ing., Postfach 248 Gerberstrasse 3, D-8948 Mindelheim(DE)**

**Beschreibung**

Die Erfindung betrifft eine Einrichtung zur in Lastrichtung praktisch rückwirkungsfreien Begrenzung einer Querbewegung einer Last gemäß dem Oberbegriff des Patentanspruchs 1 (US-A 3 063 576).

Beim Dosieren von Schüttgut werden Behälter verwendet, die sich in vertikaler Richtung auf Kraftmeßzellen abstützen, die Signale bezüglich des Gewichts der dem Behälter zugeführten Schüttgutmenge abgeben. Andererseits läßt sich durch Differenzbildung der von den Kraftmeßzellen abgegebenen Werte die Menge von aus dem Behälter abgegebenen Schüttgut laufend überwachen. Beim Zuführen und Abführen von Schüttgut treten Erschütterungen auf, die zu Pendel- und/oder Drehbewegungen des Behälters führen können. Die hierdurch erzeugten Horizontalkräfte und -momente verfälschen das Meßergebnis. Ferner besteht die Gefahr, daß bei größeren Ausschlägen die Kraftmeßzellen beschädigt werden. Es war deshalb bisher erforderlich, mittels Konsolen und Rahmen eine derartige Pendelbewegung zu begrenzen, was zu sperrigen Konstruktionen mit ensprechendem Kostenaufwand für Herstellung und Montage führte.

Die US-PS 3 063 576 befaßt sich mit einem Gabelstapler, dessen Gabeln aus je einem Ober- und Unterteil bestehen, zwischen denen in größerem Abstand voneinander zwei Kraftmeßzellen angeordnet sind. Zur Begrenzung einer Querbewegung ist das einen U-förmigen Querschnitt aufweisende Unterteil mit einem zentralen nach oben ragenden Stift versehen. Das Oberteil ist ebenfalls U-förmig und umgreift das Unterteil in verhältnismäßig geringem Abstand. Ein rohrförmiger Ansatz ist auf der Unterseite des Oberteils angebracht und umgreift den Stift, der in der Nähe seines freien Endes einen in eine Rille eingelassenen elastischen O-Ring trägt, welcher auf der Innenseite des rohrförmigen Ansatzes liegt. Bei einer Bewegung zwischen Ober- und Unterteil in Lastrichtung ergibt sich zwangsläufig eine Reibung des O-Ringes am Ansatz bzw. am Stift, so daß das Meßergebnis verfälscht werden kann. Eine Querbewegung ist durch die schmalen Spalten zwischen den Schenkeln des Ober- und Unterteils äußerst begrenzt, so daß sich rasch ein Klemmen ergibt.

Der Erfindung liegt die Aufgabe zugrunde, die eingangs aufgeführte Einrichtung mit sehr einfachem, kostengünstigem Aufbau anzugeben, der alle Horizontalkräfte und -momente praktisch ohne Rückwirkung in Lastrichtung aufnimmt.

Diese Aufgabe wird erfindungsgemäß mit den Merkmalen des Kennzeichens des Patentanspruchs 1 gelöst.

Durch das elastische Element wird die Einrichtung progressiv stoßdämpfend und rückzentrierend. Er geht bei größerer Belastung auf Festanschlag und kann mit den Kraftmeßzellenelementen integriert eingebaut werden. Somit benötigt er weder einen zusätzlichen Platz noch Konsolen und Rahmen.

Bevorzugte Weiterbildungen der erfindungsgemäßen Einrichtung sind in den abhängigen Ansprüchen gekennzeichnet und eine bevorzugte Verwendung ist im Anspruch 6 angegeben.

Ein Ausführungsbeispiel wird nachstehend anhand der Zeichnung näher erläutert. Es zeigen:

Fig. 1 eine schematische Seitenansicht eines Dosier- oder Wägebehälters, bei dem die Einrichtung Anwendung finden kann; und

Fig. 2 die beispielsweise Ausführungsform der Einrichtung.

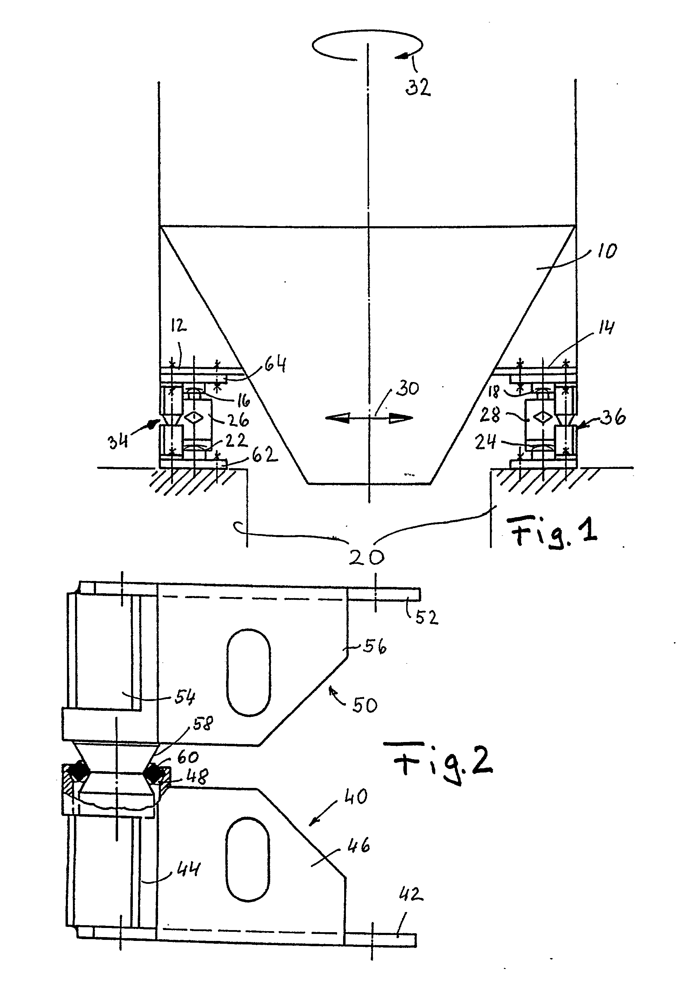

Fig. 1 zeigt einen Behälter 10 mit waagrechten Streben 12, 14, an deren Unterseite sich je ein Kalottenlager 16, 18 befindet. Je ein weiteres Kalottenlager 22, 24 stützt sich auf einer waagrechten Platte oder dgl. eines Gerüsts oder einer anderen ortsfesten Unterlage ab. Zwischen den Kalottenlagern 16, 22 bzw. 18, 24 ist je eine Kraftmeßzelle 26 bzw. 28 angeordnet.

Obwohl nur zwei Kraftmeßzellen gezeigt sind, können über den Umfang verteilt weitere Kraftmeßzellen in gleicher Weise vorgesehen sein, wie die Kraftmeßzellen 26, 28.

Dem Behälter wird Schüttgut von oben zugeführt bzw. nach unten hin entnommen. Das Gewicht der sich zu einem beliebigen Zeitpunkt in dem Behälter befindlichen Schüttgutmenge wird aus den von den Kraftmeßzellen abgegebenen Signalen berechnet. Bei der Zuführung und Abführung von Gut ergeben sich Erschütterungen, die Pendelbewegungen des Behälters 10 auslösen, so daß Horizontalkräfte bzw. -momente am Behälter 10 wirken, wie sie durch die Pfeile 30 und 32 angedeutet sind.

Um ein derartiges Pendeln zu begrenzen und möglichst rasch zu dämpfen, sind mindestens zwei Einrichtungen oder Pendelbegrenzer 34, 36 vorgesehen, die zwischen dem Behälter 10 und dem Gerüst 20 angeordnet sind.

Fig. 2 zeigt eine Ausführungsform des Pendelbegrenzers 34, 36 im einzelnen. Das Unterteil 40 besteht aus einer unteren, horizontalen Befestigungsplatte 42, auf der ein Rohr 44 senkrecht aufgesetzt ist. Eine Versteifungsplatte 46 erstreckt sich zwischen der horizontalen Befestigungsplatte 42 und dem Rohr 44. Das obere Ende des Rohres 44 ist innen mit einer Ringnut 48 versehen, die bevorzugt einen dreieckigen Querschnitt aufweist.

Das Oberteil 50 des Pendelbegrenzers besitzt eine obere horizontale Befestigungsplatte 52, an der nach unten hin und senkrecht dazu ein Zylinder 54 angesetzt ist. Eine Versteifungsplatte 56 verbindet die horizontale obere Befestigungsplatte 52 und den Zylinder 54. Das untere Ende des Zylinders 54 ist mit einer ringförmigen Vertiefung 58 mit vorzugsweise dreieckigem Querschnitt versehen. Ein elastisches Ringelement 60, vorzugsweise mit quadratischem Querschnitt ist derart angeordnet, daß seine Außenkante in der ringförmigen Vertiefung 48 und seine Innenkante in der ringförmigen Vertiefung 58 verläuft. Es verbindet somit Ober- und Unterteil des Pendelbegrenzers, insbesondere das Rohr 44 mit dem Zylinder 54. Durch diese schneidenartige Lagerung des Ringelements 60 in den Vertiefungen 48, 58 ergibt sich nur ein minimaler Widerstand gegen eine Vertikalbewegung des Zylinders 54 im Rohr 48, während jede Horizontalbewegung progressiv stoßgedämpft wird und eine Rückzentrierung des Zylinders 54 im Rohr 48 erfolgt.

Obwohl das Ringelement 60 bevorzugt einen quadratischen oder rechteckigen Querschnitt besitzt, käme auch ein elliptischer oder halbkreisförmiger Querschnitt in Frage.

Aufgrund der kompakten Bauweise und der geringen Abmessungen kann der Pendelbegrenzer bevorzugt in die Kraftmeßzellenanordnung, bestehend aus der Kraftmeßzelle 26 und den Kalottenlagern 16, 22, integriert werden, wie dies Fig. 1 zeigt. Hierzu wird die horizontale untere Befestigungsplatte 42 an einer Grundplatte 62 befestigt, vorzugsweise verschraubt, die das untere Kalottenlager 22 trägt, während die horizontale obere Befestigungsplatte 52 mit einer das obere Kalottenlager tragenden Deckplatte 64 verbunden wird. Die ganze Einheit läßt sich dann mittels weniger Handgriffe zwischen der horizontalen Strebe 12 und dem Gerüst 20 anbringen.

Der Pendelbegrenzer kann überall dort in Einsatz kommen, wo bei geringster Rückwirkung in Lastrichtung senkrecht zu dieser wirkende Kräfte und Momente aufzufangen sind.

## Patentansprüche

1. Einrichtung zur in Lastrichtung praktisch rückwirkungsfreien Begrenzung einer Querbewegung einer Last mit zwei in Lastrichtung beweglich ineinandergreifenden Teilen (40, 50), von denen eines an der Eingriffsstelle rohrförmig (40) und das andere zylinderförmig (50) ausgebildet ist und zwischen denen an der Eingriffsstelle ein quer zur Lastrichtung dämpfend wirkendes in eines der beiden Teile eingelassenes ringförmiges elastisches Element (60) angeordnet ist, dadurch gekennzeichnet, daß beide Teile (40, 50) an der Eingriffsstelle mit zueinander komplementären Ausnehmungen mit im wesentlichen dreieckigem Querschnitt versehen sind, die das elastische Element (60) aufnehmen und daß das elastische Element (60) einen Querschnitt mit einer schneidenartigen Innen- und Außenkante aufweist, die an der jeweiligen Scheitellinie der beiden Ausnehmungen (48, 58) anliegen.

2. Einrichtung nach Anspruch 1, dadurch gekennzeichnet, daß der Querschnitt rechteckig, insbesondere quadratisch ist.

3. Einrichtung nach Anspruch 2, dadurch gekennzeichnet, daß die beiden Teile (40, 50) in eine Montageeinheit einer Kraftmeßzelle (26, 28) integriert sind.

4. Einrichtung nach Anspruch 1, 2 oder 3, dadurch gekennzeichnet, daß an beiden Teilen (40, 50) zu deren Längsachse senkrecht verlaufende Befestigungsplatten (42, 52) ausgebildet sind.

5. Einrichtung nach einem der vorhergehenden Ansprüche, dadurch gekennzeichnet, daß an beiden Teilen (40, 50) ein Versteifungsteil (46, 56) ausgebildet ist, das sich zwischen den Teilen (40, 50) und den Befestigungsplatten (42, 52) erstreckt.

6. Verwendung einer Einrichtung nach einem der vorhergehenden Ansprüche als Pendelbegrenzer von Behältern von Wäge- oder Dosiereinrichtungen.

## Claims

1. Device for limiting a lateral movement of a load essentially retroactive-free in loading direction, including two parts (40, 50) engaged into each other, moveably in loading direction, one of them being formed tubelike (40) and the other cylinderlike (50) at the engaging position and between them at the engaging position a ringlike elastic element (60) being provided acting in a dampening manner lateral to the loading direction and being recessed into one of the two parts, characterized in that the two parts (40, 50) are provided at the engaging position with recesses complementary to each other having an essentially triangular crossection, the recesses having the elastic element (60) inserted thereto, and that the elastic element (60) has a crossection having cut-like inner and outer edges engaging the respective vertexline of the two recesses (48, 58).

2. Device according to claim 1 characterized in that the crossection is rectangular, in particular square-like.

3. Device according to claim 2, characterized in that the two parts (40, 50) are integrated into an assembly unit of a force measuring cell (26, 28).

4. Device according to claim 1, 2 or 3, characterized in that at the two parts (40, 50) fixing plates (42, 52) are formed extending vertical to the longitudinal axis thereof.

5. Device according to any of the preceding claims, characterized in that at the two parts (40, 50) a stiffening portion (46, 56) is formed extending between the two parts (40, 50) and the fixing plates (42, 52).

6. Use of a device according to any of the preceding claims as a tilting limiter of containers of weighing or metering apparatuses.

## Revendications

1. Dispositif de limitation, pratiquement sans rétroaction dans la direction de la charge, d'un mouvement transversal d'une charge, comportant deux parties (40, 50) s'emboîtant de manière mobile l'une dans l'autre dans la direction de la charge, dont l'une est de forme tubulaire (40) et l'autre est de forme cylindrique (50) au point d'emboîtement, et entre lesquelles est prévu, au point d'emboîtement, un élément élastique (60) annulaire inséré dans l'une des deux parties, qui exerce une action d'amortissement transversalement par rapport à la direction de la charge, caractérisé en ce que les deux parties (40, 50) sont pourvues, au point d'emboîtement, de deux creux complémentaires l'un par rapport à l'autre et de section essentiellement triangulaire qui reçoivent l'élément élastique (60) et en ce que l'élément élastique (60) présente une section avec bord interne et externe en couteau se disposant sur la ligne des sommets des deux creux (48, 58).

2. Dispositif selon la revendication 1, caractérisé en ce que la section est rectangulaire, en particulier carrée.

3. Dispositif selon la revendication 2, caractérisé en ce que les deux parties (40, 50) sont intégrées à une unité de montage d'une cellule dynamométrique (26, 28).

4. Dispositif selon la revendication 1, 2 ou 3, caractérisé en ce que des plaques de fixation (42, 52) sont disposées sur les deux parties (40, 50), perpendiculairement par rapport à leur axe longitudinal.

5. Dispositif selon l'une des revendications qui précèdent, caractérisé en ce qu'un élément raidisseur (46, 56) est prévu sur les deux parties (40, 50), cet élément s'étendant entre les parties (40, 50) et les plaques de fixation (42, 52).

6. Utilisation d'un dispositif selon une des revendications qui précèdent comme limiteur de mouvement pendulaire de réservoirs de dispositifs de pesage ou de dosage.

Fig.1

Fig.2